# EUROPÄISCHE PATENTSCHRIFT

(11) **EP 3 386 678 B1**
(45) Veröffentlichungstag und Bekanntmachung des Hinweises auf die Patenterteilung: **09.09.2020**
(21) Anmeldenummer: 16822375.8
(22) Anmeldetag: 07.12.2016
(51) Int. Cl.: B23P 19/06, B25B 23/00

(54) **VORRICHTUNG ZUM AUTOMATISIERTEN AN- UND ABKOPPELN EINES WERKZEUGAUFSATZES SOWIE VERFAHREN ZUM AUTOMATISIERTEN VERBINDEN WENIGSTENS ZWEIER WERKSTÜCKE**
DEVICE FOR THE AUTOMATED COUPLING AND DECOUPLING OF A TOOL ATTACHMENT, AS WELL AS METHOD FOR THE AUTOMATED CONNECTION OF AT LEAST TWO WORKPIECES
DISPOSITIF D'ACCOUPLEMENT ET DE DÉSACCOUPLEMENT AUTOMATISÉ D'UNE FIXATION D'OUTIL ET PROCÉDÉ DE RACCORDEMENT AUTOMATISÉ D'AU MOINS DEUX PIÈCES

(30) Priorität: 07.12.2015 DE 102015121287
(43) Veröffentlichungstag der Anmeldung: 17.10.2018
(73) Patentinhaber: Dürr Assembly Products GmbH, 66346 Püttlingen (DE)
(72) Erfinder: BRACH, Christian, 57200 Wiesviller (FR); HERRMANN, Armin, 66292 Riegelsberg (DE)
(74) Vertreter: Patentanwaltskanzlei Vièl & Wieske PartGmbB
(86) Internationale Anmeldenummer: PCT/DE2016/100568
(87) Internationale Veröffentlichungsnummer: WO 2017/097290

(56) Entgegenhaltungen:
- EP-A2- 2 065 125
- WO-A1-2010/115411
- JP-A- S6 119 526
- JP-A- H01 140 931
- JP-A- 2013 035 104
- JP-A- 2014 018 873
- US-A- 4 938 107
- US-A1- 2005 005 742
- US-A1- 2011 245 052

## Beschreibung

Die vorliegende Erfindung betrifft eine Vorrichtung zum automatisierten An- und Abkoppeln eines Werkzeugaufsatzes der Vorrichtung von einem Werkzeugantriebsmittel der Vorrichtung nach dem Oberbegriff des Anspruchs 1 sowie ein Verfahren zum automatisierten Verbinden wenigstens zweier Werkstücke.

Es sind Verbindungsmittel bekannt, die als Schrauben ausgebildet sein können. Diese Schrauben können zum Antrieb beispielsweise einen Schlitz aufweisen, einen Kreuzschlitz, eine Sacklochbohrung, deren Außenkanten als Innensechskant ausgebildet sind oder deren Außenkanten zur Aufnahme eines sogenannten Torx-Antriebs ausgebildet sind, oder eine Gestaltung des Außenumfangs an einem Ende der Schraube, der als Außensechskant ausgebildet ist. Die Schrauben können mit einem entsprechend gestalteten Werkzeugaufsatz gegriffen werden, der als Schraubendreher, Kreuzschlitzschraubendreher, Innensechskantantrieb, Torx-Antrieb oder als Außensechskant ausgebildet sein kann. Es können auch andere Ausgestaltungen der Schraube realisiert sein, über die die Schraube mit einem Werkzeugaufsatz gegriffen werden kann. Der Werkzeugaufsatz kann als sogenanntes Bit oder auch als sogenannte Nuss ausgebildet sein, die in eine entsprechende Aufnahme eines Werkzeugantriebsmittels eingeführt werden kann bzw. auf das obere Ende eines Werkzeugantriebsmittels aufgesteckt werden kann.

Um eine bestimmte Haltekraft für den Werkzeugaufsatz auf dem Werkzeugantriebsmittel zu erreichen, ist es bekannt, an dem Werkzeugantriebsmittel eine federelastisch gelagerte Kugel vorzusehen, die teilweise seitlich am oberen Ende des Werkzeugantriebsmittels hervorsteht. Beim Aufstecken bzw. Einstecken des Werkzeugaufsatzes wird diese Kugel entgegen der Federkraft in das obere Ende des Werkzeugantriebsmittels hineingedrückt, so dass der Werkzeugaufsatz aufgesteckt bzw. eingesteckt werden kann. In der Endposition des an das Werkzeugantriebsmittel angekoppelten Werkzeugaufsatzes korrespondiert diese Kugel mit einer Ausnehmung des Werkzeugaufsatzes, in die die Kugel infolge der Federkraft hineingedrückt wird. Zum Abziehen des Werkzeugaufsatzes muss die Kugel wieder entgegen der Federkraft eingedrückt werden. Daraus resultiert eine Haltekraft für den Werkzeugaufsatz auf dem Werkzeugantriebsmittel, die von der Federkraft abhängt.

Das Verbindungsmittel kann beispielsweise auch ein Bolzen sein, der in entsprechende Aufnahmebohrungen der Werkstücke eingeführt werden kann, um diese relativ zueinander zu orientieren bzw. um diese zu verbinden. In diesem Fall weist der Werkzeugaufsatz eine Sacklochbohrung auf, die mit der äußeren Form und den äußeren Abmessungen des Bolzens korrespondiert. Dadurch kann der Bolzen mit dem Werkzeugaufsatz gegriffen und in dessen axialer Richtung in eine entsprechende Bohrung des Werkstückes eingeführt (eingeschoben) werden.

Entsprechend diesen beschriebenen Beispielen sind der Werkzeugaufsatz und das Werkzeugantriebsmittel zur Betätigung eines Verbindungsmittels zur Verbindung wenigstens zweier Werkstücke ausgestaltet. Das Verbindungsmittel können Schrauben sein oder auch Bolzen. Die Herstellung der Verbindung der wenigstens zwei Werkstücke erfolgt durch eine Bewegung des Verbindungsmittels in dessen axialer Richtung. Der Werkzeugaufsatz ist mit einem Werkzeugantriebsmittel koppelbar und auch lösbar, indem das Werkzeugantriebsmittel und der Werkzeugaufsatz in axialer Richtung relativ zueinander bewegt werden.

Aus der EP 2 065 125 A2 ist es bekannt, dass ein Werkzeugantriebsmittel und ein Werkzeugaufsatz automatisiert an- und abgekoppelt werden können. Der Werkzeugaufsatz und das Werkzeugantriebsmittel sind zur Betätigung eines Verbindungsmittels zur Verbindung wenigstens zweier Werkstücke ausgestaltet im Sinne einer Bewegung des Verbindungsmittels in dessen axialer Richtung. In der EP 2 065 125 A2 ist beschrieben, dass der Werkzeugaufsatz mit dem Werkzeugantriebsmittel ankoppelbar und auch abkoppelbar sein sollen, indem das Werkzeugantriebsmittel und der Werkzeugaufsatz in axialer Richtung relativ zueinander bewegt werden. Das Werkzeugantriebsmittel weist ein formschlüssig wirkendes Fixierelement für den Werkzeugaufsatz auf, sowie ein Riegelelement. Das Fixierelement ist abhängig von der Position des Riegelelementes in einer fixierten Stellung formschlüssig verriegelt oder in einer gelösten Stellung. Der Werkzeugaufsatz ist koppelbar und lösbar, wenn das Fixierelement gelöst ist. Ein auf das Werkzeugantriebsmittel aufgesetzter Werkzeugaufsatz wird von dem Fixierelement formschlüssig gehalten, wenn das Fixierelement in der fixierten Stellung verriegelt ist, wobei das Riegelelement federelastisch gelagert ist. Zu dem Riegelelement ist ein Betätigungselement vorhanden. Das Riegelelement wird durch die Federkraft in der Position gehalten, in der das Fixierelement in der fixierten Stellung formschlüssig verriegelt ist. Das Riegelelement geht in die Position über, in der das Fixierelement gelöst ist, wenn das Betätigungselement entgegen der Federkraft bewegt bzw. gehalten wird. Weiterhin ist ein Magazin vorhanden mit wenigstens einem Werkzeugaufsatzaufnahmeraum. Wenn das Werkzeugantriebsmittel nicht mit einem Werkzeugaufsatz gekoppelt ist, sind das Magazin und das Werkzeugantriebsmittel so zueinander beweglich, dass einer der wenigstens einen Werkzeugaufsatzaufnahmeräume gegenüber dem Werkzeugantriebsmittel so positionierbar ist, dass das Werkzeugantriebsmittel mit einer Bewegung in axialer Richtung gegenüber dem Werkzeugaufsatz mit dem Werkzeugaufsatz koppelbar ist. Insoweit entspricht die Ausgestaltung nach der EP 2 065 125 A2 dem Oberbegriff des Anspruchs 1 sowie einem Verfahren zum automatisierten Verbinden von wenigstens zwei Werkstücken.

Bei der EP 2 065 125 A2 wird das Betätigungselement mittels eines Antriebselementes (Servoantrieb) relativ zu dem Werkzeugantriebsmittel in axialer Richtung des Werkzeugantriebsmittels bewegt. Durch diese Bewegung kann das Fixierelement in dessen gelöste Stellung gebracht werden. Das Betätigungselement ist dazu als länglicher Stift ausgebildet, der den Werkzeugaufsatz in dessen Mitte durchdringt. Der Werkzeugaufsatz ist eine sogenannte "Nuss", die so ausgebildet ist, dass sie einen Schraubenkopf, der als Sechskant ausbildet ist, formschlüssig außen umgreift und bei einer Drehung um seine Längsachse die Schraube ebenfalls in Drehung versetzt. Eine derartige Nuss weist in ihrem Zentrum eine Öffnung auf, so dass die Nuss über diese Öffnung mit einem Werkzeugantriebsmittel verbunden werden kann.

Die Werkzeugaufsatzaufnahmeräume bei der EP 2 065 125 A2 sind so ausgebildet, dass diese zur Aufnahme der Nuss im Bodenbereich eine sechskantförmige Erhebung aufweisen, auf die Nuss formschlüssig aufsetzbar ist. Weiterhin ist das Betätigungselement zentrisch durch diese sechskantförmige Erhebung geführt, um bei einer entsprechenden Positionierung des Werkzeugantriebsmittels durch eine Bewegung in axialer Richtung relativ zum Werkzeugantriebsmittel das Riegelelement in die gelöste Stellung zu bringen.

Der vorliegenden Erfindung liegt die Aufgabe zu Grunde, eine Vorrichtung und ein Verfahren vorzuschlagen, mit dem insbesondere eine automatisierte Herstellung einer Verbindung von wenigstens zwei Werkstücken vereinfacht wird. Die automatisierte Herstellung der Verbindung kann insbesondere bei der Herstellung von Fahrzeugen - insbesondere Kraftfahrzeugen - eingesetzt werden. Dies gilt insbesondere auch im Bereich der sogenannten Hochzeit, bei der das Chassis des Fahrzeugs mit der Karosserie verbunden wird.

Diese Aufgabe wird nach der vorliegenden Erfindung durch eine Vorrichtung gemäß Anspruch 1 gelöst, die nach der vorliegenden Erfindung in Weiterbildung der Merkmale der EP 2 065 125 A2, die den Oberbegriff des Anspruchs 1 bilden, so ausgestaltet ist,
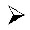 dass das Riegelelement mit dem Betätigungselement eine federelastisch gelagerte Einheit bildet,
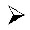 dass dem wenigstens einen Werkzeugaufsatzaufnahmeraum lösbare und blockierbare Haltemittel zugeordnet sind, durch die bei blockierten Haltemitteln der Werkzeugaufsatz form- und / oder kraftschlüssig gehalten wird zumindest gegenüber einer Bewegung in axialer Richtung relativ zu den Haltemitteln,
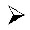 dass dem Werkzeugaufsatzaufnahmeraum ein Klemmelement für das Betätigungselement zugeordnet ist derart, dass das Betätigungselement bei der Bewegung des Werkzeugantriebsmittels in axialer Richtung relativ zu dem durch die blockierten Haltemittel gehaltenen Werkzeugaufsatz entgegen der Federkraft gegenüber dem Werkzeugantriebsmittel bewegt wird, so dass das Riegelelement in die Position übergeht, in der das Fixierelement gelöst ist und
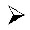 dass das Werkzeugantriebsmittel in axialer Richtung beweglich ist gegenüber dem durch die blockierten Haltemittel gehaltenen Werkzeugaufsatz zum An- bzw. Abkoppeln des Werkzeugaufsatzes mit bzw. von dem Werkzeugantriebsmittel.

Diese Ausgestaltung erweist sich in verschiedener Hinsicht als vorteilhaft.

Zum einen ergibt sich durch die formschlüssige Verbindung eines angekoppelten Werkzeugaufsatzes auf einem Werkzeugantriebsmittel, dass der Werkzeugaufsatz beim Betätigen von Verbindungsmitteln sicher gehalten wird und sich nicht unbeabsichtigt von dem Werkzeugantriebsmittel lösen kann. Dies könnte beispielsweise passieren, wenn eine Schraube mit einem vergleichsweise großen Drehmoment angezogen wird und sich der Werkzeugaufsatz gegenüber dem Schraubenkopf (bzw. der Mutter) so verspannt, dass die daraus resultierende Haltekraft größer ist als die Kraft, die sich bei der eingangs im Zusammenhang mit dem Stand der Technik beschriebenen Halterung des Werkzeugaufsatzes auf dem Werkzeugantriebsmittel aus der kraftschlüssigen Verbindung des Werkzeugantriebsmittels mit dem Werkzeugaufsatz ergibt. In dem beschriebenen Fall würde sich der Werkzeugaufsatz lösen und auf dem Schraubenkopf verbleiben.

Insofern ist durch den Gegenstand nach Anspruch 1 - insoweit übereinstimmend mit der Ausgestaltung nach der EP 2 065 125 A2 - gerade auch im automatisierten Betrieb sichergestellt, dass sich der Werkzeugaufsatz nicht unbeabsichtigt löst und anschließend gesucht werden muss. Dies hätte auch eine Unterbrechung der Fertigung zur Folge.

Trotz dieser verbesserten Montage des Werkzeugaufsatzes hinsichtlich der Unverlierbarkeit in der Produktion wird es durch die vorliegende Erfindung möglich, einen Wechsel des Werkzeugaufsatzes automatisiert durchzuführen.

Vorteilhaft wird eine Vorrichtung vorgeschlagen, die verschiedene Werkzeugaufsätze aufnehmen kann, die an ein Werkzeugantriebsmittel ankoppelbar sind. Damit können durch einen Wechsel des Werkzeugaufsatzes unterschiedliche Verbindungsmittel befestigt werden. Bei diesen unterschiedlichen Verbindungsmitteln kann es sich beispielsweise um Schrauben unterschiedlicher Größe (d.h. insbesondere unterschiedlicher Gewindegrößen) handeln.

Durch die beschriebene Ausgestaltung wird es möglich, einen Wechsel des Werkzeugaufsatzes vorzunehmen. Der Ablauf des Wechsels des Werkzeugaufsatzes ist im Zusammenhang mit den nachfolgenden Verfahrensansprüchen näher beschrieben.

Durch das Magazin ergibt sich in einfacher Weise eine geordnete Aufbewahrung der einzelnen Werkzeugaufsätze mit definierten Ablageplätzen, an denen die Werkzeugaufsätze abgelegt und danach auch wieder aufgenommen werden können.

Außer der Ausführung des Magazins mit verschiedenen Werkzeugaufsätzen, die gewechselt werden können, ist auch eine Ausführung denkbar, bei der in einem Magazin ein oder mehrere Verbindungsmittel gelagert werden sowie dazu passende Werkzeugaufsätze. Soweit die Verbindungsmittel in einem Magazin mit ein und demselben Werkzeugaufsatz betätigt werden können, genügt es, in dem Magazin lediglich einen Werkzeugaufsatz zu lagern. Es können dann mit einem Werkzeugantriebsmittel alle Verbindungsmittel eines Magazins bearbeitet werden, weil die zugehörigen Werkzeugaufsätze (ggf. auch nur ein einziger Werkzeugaufsatz) in dem Magazin gelagert sind.

Bei der Ausgestaltung nach Anspruch 2 weist das Magazin weiterhin wenigstens einen Verbindungsmittelaufnahmeraum auf zur Aufnahme eines Verbindungsmittels, wobei mittels des Verbindungsmittels wenigstens zwei Werkstücke miteinander verbindbar sind, indem das Verbindungsmittel zur Herstellung einer Verbindung der wenigstens zwei Werkstücke in dessen axialer Richtung aus dem Magazin herausbewegt wird durch eine Betätigung mit dem Werkzeugaufsatz, der von dem Werkzeugantriebsmittel angetrieben wird, wobei der Werkzeugaufsatz das jeweilige Verbindungsmittel an einem Werkzeugangriffsbereich greift, wobei in dem Verbindungsmittelaufnahmeraum unterhalb des Werkzeugangriffsbereiches des Verbindungsmittels eine Öffnung zur Durchführung des Werkzeugaufsatzes vorhanden ist.

In diesem Zusammenhang ist auf die EP 2 416 927 B1 zu verweisen. Aus dieser Patentschrift ist es bereits bekannt, ein Magazin vorzusehen mit mehreren Aufnahmeräumen für Verbindungsmittel. Diese Verbindungsmittel werden zunächst in diesen Aufnahmeräumen positioniert und anschließend mit Haltemitteln gehalten bis diese Verbindungsmittel von einem Werkzeug gegriffen werden, um dann entsprechend betätigt zu werden.

Demgegenüber weist die Vorrichtung nach der vorliegenden Erfindung gemäß Anspruch 2 ein Magazin auf, in dem sowohl Verbindungsmittel als auch einer oder mehrere Werkzeugaufsätze gelagert werden können. Dies erweist sich insofern als vorteilhaft, weil zu den gelagerten Verbindungsmitteln auch der passende Werkzeugaufsatz bzw. die passenden Werkzeugaufsätze mit gelagert werden können. Durch einen Zugriff auf ein derart ausgestaltetes Magazin können vorteilhaft mit kurzen Zykluszeiten bei automatisierten Fertigungen Verbindungen hergestellt werden.

Bei der Ausgestaltung nach Anspruch 3 ist das Magazin zweigeteilt derart, dass das Klemmelement gegenüber dem Haltemittel in axialer Richtung bewegbar ist derart,
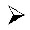 dass das Klemmelement und das Halteelement in einer ersten Stellung einen solchen Abstand aufweisen, dass ein in das Magazin eingeführtes Werkzeugantriebsmittel, dessen Betätigungselement durch das Klemmelement in der Position gehalten wird, in der das Fixierelement gelöst ist, und ein in dem Werkzeugaufsatzaufnahmeraum durch die Haltemittel gehaltener Werkzeugaufsatz beabstandet sind, und
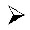 dass das Klemmelement und die Haltemittel aus dieser ersten Stellung in eine zweite Stellung aufeinander zu bewegbar sind, in der der Werkzeugaufsatz auf dem Werkzeugantriebsmittel aufgesteckt bzw. in das Werkzeugantriebsmittel eingesteckt ist, wobei der Werkzeugaufsatz auch beim Übergang von der ersten Stellung in diese zweiten Stellung von den Haltemitteln gehalten wird, wobei das Betätigungselement beim Übergang von dieser ersten Stellung in die zweite Stellung durch das Klemmelement entgegen der Federkraft gehalten wird, so dass das Riegelelement in der Position ist, in der das Fixierelement gelöst ist, und
dass das Werkzeugantriebsmittel aus dieser zweiten Stellung so gegenüber dem Klemmelement in eine dritte Stellung bewegbar ist, dass der Werkzeugaufsatz auf das Werkzeugantriebsmittel aufgesteckt bzw. in das Werkzeugantriebsmittel eingesteckt ist und in dieser Position durch das Fixierelement gehalten wird, wobei beim Übergang von der zweiten in die dritte Stellung die Haltemittel des Werkzeugaufsatzaufnahmeraums gelöst sind und wobei das Klemmelement gelöst ist.

Vorteilhaft wird hierbei eine Ausgestaltung der Vorrichtung beschrieben, bei der beim Einführen des Werkzeugantriebsmittels in das Magazin das Betätigungselement automatisch entgegen seiner Federkraft bewegt und dann gehalten wird. Dadurch wird das Fixierelement gelöst, so dass der Werkzeugaufsatz auf das Werkzeugantriebsmittel aufgesetzt werden kann. Anschließend werden die Haltemittel des Werkzeugaufsatzes geöffnet. Dadurch verbleibt der Werkzeugaufsatz auf dem Werkzeugantriebsmittel. Anschließend wird das Klemmelement geöffnet, so dass das Riegelelement in die Position übergeht, in der das Fixierelement fixiert ist und den Werkzeugaufsatz formschlüssig hält.

Anspruch 4 beschreibt eine Ausgestaltung der Vorrichtung, bei der in dem Magazin der wenigstens eine Werkzeugaufsatzaufnahmeraum und der wenigstens eine Verbindungsmittelaufnahmeraum in einer Ebene nebeneinander angeordnet sind.

Dadurch bleibt das Magazin insgesamt flach.

Allerdings ist dabei notwendig, das Werkzeugantriebsmittel zunächst relativ zum Werkzeugaufsatzaufnahmeraum des Magazins in axialer Richtung zu bewegen, um den Werkzeugaufsatz auf dem Werkzeugantriebsmittel aufzustecken bzw. einzustecken.

Anschließend muss das Werkzeugantriebsmittel mit dem Werkzeugaufsatz unterhalb eines Verbindungsmittels in einem Verbindungsmittelaufnahmeraum positioniert werden, um anschließend dieses Verbindungsmittel betätigen zu können, wenn dieses nicht mehr im Verbindungsmittelaufnahmeraum gehalten wird.

Daran anschließend muss das Werkzeugantriebsmittel mit dem Werkzeugaufsatz wieder zurückbewegt werden, wenn das Verbindungsmittel angezogen wurde. Wenn der Werkzeugaufsatz wieder in einen Werkzeugaufsatzaufnahmeraum eingebracht werden soll, muss das Werkzeugantriebsmittel mit dem Werkzeugaufsatz wieder relativ zu einem Werkzeugaufsatzaufnahmeraum positioniert und axial bewegt werden.

Der Werkzeugaufsatz wird in dem Werkzeugaufsatzaufnahmeraum wieder mit den Haltemitteln gehalten und das Werkzeugantriebsmittel erneut relativ zum Werkzeugaufsatzaufnahmeraum in axialer Richtung bewegt, um den Werkzeugaufsatz vom Werkzeugantriebsmittel zu lösen. Dies erfolgt wiederum, wenn das Betätigungselement entgegen der Federkraft in der Position gehalten wird, in der das Riegelelement in einer Position ist, in der das Fixierelement gelöst ist.

Insgesamt wird bei dieser Anordnung allerdings der Platz in dem Magazin gut genutzt, weil in dem Magazin nur der Raum als Werkzeugaufsatzaufnahmeraum benötigt wird, der für (verschiedene) Werkzeugaufsätze bereitgestellt werden muss. Im Übrigen steht der Platz im Magazin zur Verfügung für Verbindungsmittelaufnahmeräume. Wird beispielsweise nur eine Art von Verbindungsmitteln im Magazin gelagert, genügt es, lediglich einen Werkzeugaufsatzaufnahmeraum vorzusehen.

In einer vorteilhaften Weiterbildung ist das Magazin so ausgestaltet, dass allgemein Aufnahmeräume vorhanden sind, die entweder als Werkzeugaufsatzaufnahmeraum oder als Verbindungsmittelaufnahmeraum genutzt werden können. Die Haltemittel sind hierbei konfiguriert, dass sie sowohl einen Werkzeugaufsatz sowie auch ein Verbindungsmittel in dem Aufnahmeraum halten können.

Mit dieser vorteilhaften Weiterbildung wird es möglich, ein Magazin flexibel zu nutzen. Es genügt, lediglich einen Werkzeugaufsatz in dem Magazin zu lagern, wenn in dem Magazin im Übrigen lediglich identische Verbindungsmittel gelagert sind. Werden in dem Magazin verschiedene Arten von Verbindungsmitteln gelagert, können flexibel eine entsprechende Anzahl an Aufnahmeräume für die entsprechenden Werkzeugaufsätze vorgesehen werden.

Die Anordnung der Werkzeugaufsatzaufnahmeräume gegenüber den Verbindungsmittelaufnahmeräumen lässt sich auch anders vorsehen.

Bei der Ausgestaltung nach Anspruch 5 weist das Magazin mehrere Werkzeugaufsatzaufnahmeräume auf, die in einer ersten Ebene angeordnet sind, sowie mehrere Verbindungsmittelaufnahmeräume, die in einer zweiten Ebene angeordnet sind. Die Werkzeugaufsatzaufnahmeräumen in der ersten Ebene sind gegenüber den Verbindungsmittelaufnahmeräumen in der zweiten Ebene derart positioniert, dass ein Verbindungsmittel in einem Verbindungsmittelaufnahmeraum gegenüber einem Werkzeugaufsatz in einem Werkzeugaufsatzaufnahmeraum derart positioniert ist, dass der Werkzeugaufsatz bei einer Bewegung des Werkzeugaufsatzes in axialer Richtung des Verbindungsmittels das Verbindungsmittel an dem Werkzeugangriffsbereich des Verbindungsmittels greift.

Dieser Anspruch beschreibt somit eine Ausgestaltung, bei der sich jeweils ein Werkzeugaufsatzaufnahmeraum unterhalb eines Verbindungsmittelaufnahmeraums befindet. Dadurch wird es möglich, vor jeder Montage eines Verbindungsmittels durch eine entsprechende axiale Bewegung des Werkzeugantriebsmittels zunächst den Werkzeugaufsatz aus dem Werkzeugaufsatzaufnahmeraum anzukoppeln, dann das Verbindungsmittel zu betätigen und anschließend beim Zurückziehen des Werkzeugaufsatzes den Werkzeugaufsatz in dem Werkzeugaufsatzaufnahmeraum wieder zu lösen.

Es ergibt sich damit folgender Bewegungsablauf:
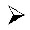 Positionieren des Werkzeugantriebsmittels unterhalb des Werkzeugaufsatzaufnahmeraums.
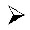 Bewegen des Werkzeugantriebsmittels relativ zum Werkzeugaufsatzaufnahmeraum in axialer Richtung zum Koppeln des Werkzeugaufsatzes an das Werkzeugantriebsmittel. Dabei wird der Werkzeugaufsatz mittels der blockierten Haltemittel gehalten. Das Betätigungselement des Werkzeugantriebsmittels wird mittels des Klemmelementes entgegen der Federkraft gehalten, so dass das Riegelelement in einer Position ist, in der das Fixierelement gelöst ist.
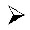 Nach dem Koppeln des Werkzeugaufsatzes an das Werkzeugantriebsmittel werden die Haltemittel gelöst. Ebenfalls wird das Klemmelement gelöst, so dass über das Betätigungselement das Riegelelement in die Position übergeht, in der das Fixierelement fixiert ist. Dadurch wird der Werkzeugaufsatz formschlüssig auf dem Werkzeugantriebsmittel gehalten.
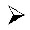 Das Werkzeugantriebsmittel wird mit dem angekoppelten Werkzeugaufsatz in axialer Richtung zu dem Verbindungsmittel bewegt und betätigt dieses.
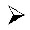 Nachdem das Verbindungsmittel seine Endposition erreicht hat, wird das Werkzeugantriebsmittel dem formschlüssig angekoppelten Werkzeugaufsatz zurückgezogen.
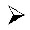 Wenn sich der Werkzeugaufsatz in dem Werkzeugaufsatzaufnahmeraum befindet, werden die Haltemittel blockiert. Ebenso wird mittels des Klemmelementes das Betätigungselement entgegen seiner Federkraft gehalten, so dass das Riegelement in einer Position ist, in der das Fixierelement gelöst ist.
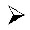 Durch eine weitere Bewegung der Werkzeugantriebsmittel gegenüber dem Werkzeugaufsatz wird der Werkzeugaufsatz von dem Werkzeugantriebsmittel gelöst.

Bei dieser Ausgestaltung erweist es sich als vorteilhaft, dass eine definierte Zuordnung der Verbindungsmittelaufnahmeräume zu den Werkzeugaufsatzaufnahmeräumen vorhanden ist. Dadurch können in einfacher Weise verschiedene Verbindungsmittel mit einem Magazin gehandhabt werden.

Es bestehen ein ggf. erhöhter Platzbedarf und auch ein erhöhter Bedarf an Werkzeugantriebsmitteln, wenn beispielsweise lediglich eine Art von Verbindungsmitteln verwendet soll, für die eigentlich nur ein Werkzeugaufsatz benötigt wird. Entsprechendes gilt, wenn mehrere gleichartige Verbindungsmittel in dem Magazin vorhanden sind, die mit einem (identischen) Werkzeugaufsatz betätigt werden können.

Bei der Ausgestaltung nach Anspruch 6 weist das Magazin mehrere Werkzeugaufsatzaufnahmeräume auf, die in einer ersten Ebene angeordnet sind, sowie mehrere Verbindungsmittelaufnahmeräume, die in einer zweiten Ebene angeordnet sind. Das Magazin ist wenigstens zweiteilig ausgestaltet derart, dass der erste Teil mit den Werkzeugaufsatzaufnahmeräumen der ersten Ebene gegenüber dem zweiten Teil mit den Verbindungsmittelaufnahmeräumen der zweiten Ebene derart positionierbar ist, dass ein Verbindungsmittel in einem Verbindungsmittelaufnahmeraum gegenüber einem Werkzeugaufsatz in einem Werkzeugaufsatzaufnahmeraum derart positioniert ist, dass der Werkzeugaufsatz bei einer Bewegung des Werkzeugaufsatzes in axialer Richtung des Verbindungsmittels das Verbindungsmittel an dem Werkzeugangriffsbereich des Verbindungsmittels greift.

Diese Ausgestaltung entspricht der Ausgestaltung nach Anspruch 5, wobei allerdings keine feste Zuordnung eines Werkzeugaufsatzaufnahmeraums zu einem Verbindungsmittelaufnahmeraum besteht. Indem die beiden Teile des Magazins relativ zueinander positionierbar sind, kann ein Werkzeugaufsatz für mehrere identische Verbindungsmittel verwendet werden, indem der entsprechende Werkzeugaufsatzaufnahmeraum zu dem jeweiligen Verbindungsmittelaufnahmeraum positioniert wird. Dies erfolgt vor dem ersten Schritt des Ablaufes, der im Zusammenhang mit Anspruch 5 erläutert wurde.

Gemäß Anspruch 7 weist das Werkzeugantriebsmittel ein drehbares Element auf. Das wenigstens eine Verbindungsmittel weist einen Gewindeteil auf. Dabei erfolgt die Bewegung des Werkzeugantriebsmittels in axialer Richtung zum An- bzw. Abkoppeln des Werkzeugaufsatzes von dem Werkzeugantriebsmittel ohne eine Drehung des drehbaren Elementes.

Es ist daher zu unterscheiden bei der axialen Bewegung, ob diese erfolgt zum Koppeln und Lösen des Werkzeugaufsatzes sowie auch zum Abziehen des Werkzeugaufsatzes nach dem Erreichen der Endposition des Verbindungsmittels. Diese Bewegungen in axialer Richtung erfolgen ohne eine Drehung des drehbaren Elementes.

Wird das Werkzeugantriebsmittel in axialer Richtung bewegt zur Betätigung des Verbindungsmittels mit dem Gewindeteil, erfolgt dies mit einer Drehung des drehbaren Elementes, um das Verbindungsmittel mit dem Gewinde entsprechend axial zu bewegen.

Dabei liegt es im Rahmen der vorliegenden Erfindung, dass das drehbare Element gegenüber dem Werkzeugaufsatz beim Ankoppeln so gedreht wird, dass das Werkzeugantriebsmittel und der Werkzeugaufsatz so zueinander ausgerichtet sind, dass der Werkzeugaufsatz bei gelöstem Fixierelement ankoppelbar ist. Diese Drehung ist jedoch begrenzt und erfolgt vorteilhaft mit niedrigerer Geschwindigkeit als dies bei der Drehung zur Bewegung des Verbindungsmittels mit einem Gewindeteil üblich ist.

Anspruch 8 betrifft ein Verfahren zum automatisierten Verbinden von wenigstens zwei Werkstücken mittels einer Vorrichtung nach einem der vorhergehenden Ansprüche.
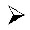 In einem ersten Schritt sind die Haltemittel in der blockierten Stellung und blockieren den Werkzeugaufsatz form- und/oder kraftschlüssig zumindest gegenüber einer Bewegung in axialer Richtung relativ zu den Haltemitteln. Weiterhin wird in diesem ersten Schritt das Betätigungselement durch das Klemmelement gegen die federelastische Kraft bewegt bzw. gehalten, so dass sich das Riegelelement in der Position befindet, in der das Fixierelement gelöst ist. Außerdem wird in diesem ersten Schritt das Werkzeugantriebsmittel in axialer Richtung relativ zu dem durch die blockierten Haltemittel gehaltenen Werkzeugaufsatz bewegt zum Koppeln des Werkzeugaufsatzes mit dem Werkzeugantriebsmittel.
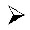 In einem zweiten Schritt werden nach dem Koppeln des Werkzeugaufsatzes mit dem Werkzeugantriebsmittel die Haltemittel gelöst. Außerdem gibt das Klemmelement das Betätigungselement frei, so dass das Riegelelement in die Position übergeht, in der das Fixierelement verriegelt ist.
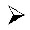 In einem dritten Schritt wird wenigstens ein Verbindungsmittel mittels des Werkzeugaufsatzes mit dem angekoppelten Werkzeugantriebsmittel betätigt.
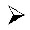 In einem nachfolgenden vierten Schritt wird der Werkzeugaufsatz wiederum in einem Werkzeugaufsatzaufnahmeraum des Magazins positioniert,
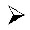 In einem fünften Schritt werden die Haltemittel dieses Werkzeugaufsatzaufnahmeraumes in die blockierte Stellung gebracht.
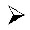 In dem vierten und/oder in dem fünften Schritt wird das Betätigungselement durch das Klemmelement gehalten, so dass das Betätigungselement entgegen der Federkraft bewegt bzw. gehalten wird. Dadurch geht das Riegelelement in die Position über, in der das Fixierelement gelöst ist.
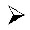 In einem sechsten Schritt wird das Werkzeugantriebsmittel in axialer Richtung relativ zu dem durch die blockierten Haltemittel gehaltenen Werkzeugaufsatz bewegt zum Abkoppeln des Werkzeugaufsatzes von dem Werkzeugantriebsmittel.
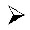 In einem siebten Schritt wird das Klemmelement geöffnet, so dass das Betätigungselement infolge der Federkraft in die Stellung übergeht, in der das Riegelelement die Position aufweist, in der das Fixierelement verriegelt ist.

Das Verfahren nach Anspruch 8 beschreibt die Abfolge der Verfahrensschritte unter Verwendung des Magazins nach einem der vorher gehenden Ansprüche. Die dort beschriebenen Vorteile gelten damit entsprechend auch für das Verfahren nach Anspruch 8.

Anspruch 9 betrifft eine Ausgestaltung des Verfahrens, bei dem mehrere Werkzeugaufsatzaufnahmeräume in dem Magazin vorhanden sind. Vor dem ersten Schritt werden das Werkzeugantriebsmittel und einer der Werkzeugaufsatzaufnahmeräume so zueinander ausgerichtet, dass bei der nachfolgenden Relativbewegung des Werkzeugantriebsmittels relativ zu diesem Werkzeugaufsatzaufnahmeraum der Werkzeugaufsatz mit dem Werkzeugantriebsmittel gekoppelt wird.

Anspruch 10 betrifft eine Ausgestaltung des Verfahrens, bei der das Werkzeugantriebsmittel ein drehbares Element aufweist. Das wenigstens eine Verbindungsmittel weist einen Gewindeteil auf. Die Bewegung des Werkzeugantriebsmittels in axialer Richtung relativ zu dem von den blockierten Haltemittelen gehaltenen Werkzeugaufsatz beim An- bzw. Abkoppeln des Werkzeugaufsatzes an bzw. von dem Werkzeugantriebsmittel erfolgt ohne eine Drehung des drehbaren Elementes.

Dies entspricht der Darstellung im Zusammenhang mit Anspruch 7, der auf die Ausgestaltung der Vorrichtung bezogen ist.

Soweit in den vorgenannten Ansprüchen auf eine Relativbewegung abgestellt ist von dem Werkzeugantriebsmittel relativ zu dem durch die blockierten Haltemittel gehaltenen Werkzeugaufsatz kann dies realisiert sein, indem die Haltemittel in ihrer Position verharren und das Werkzeugantriebsmittel bewegt wird. Ebenso ist es möglich, dass das Werkzeugantriebsmittel in seiner Position verharrt und die Haltemittel des Werkzeugaufsatzes gegenüber dem Werkzeugaufsatz bewegt werden. Da die Haltemittel blockiert sind, wird damit auch der Werkzeugaufsatz relativ zum Werkzeugantriebsmittel bewegt. Die Haltemittel können dabei relativ zum Magazin bewegbar sein. Ebenso ist es möglich, dass das Magazin mehrteilig ausgeführt ist, wobei der Teil mit den Haltemitteln insgesamt bewegt wird. In diesem Fall sind die Haltemittel fest in dem entsprechenden Teil des Magazin angebracht und sind lediglich umschaltbar zwischen der blockierten und der gelösten Stellung.

Ein Ausführungsbeispiel der Erfindung ist in der Zeichnung dargestellt. Es zeigt dabei:
- Fig. 1:: ein Ausführungsbeispiel für die Werkzeugantriebsmittel,
- Fig. 2 - Fig. 5:: einen Schnitt durch ein Magazin in verschiedenen Stellungen mit einem Werkzeugantriebsmittel und
- Fig. 6:: eine Erläuterung des Grundprinzips der Ankopplung eines Werkzeugaufsatzes an einem Werkzeugantriebsmittel mit einem Fixierelement, einem Riegelelement und einem Betätigungselement.

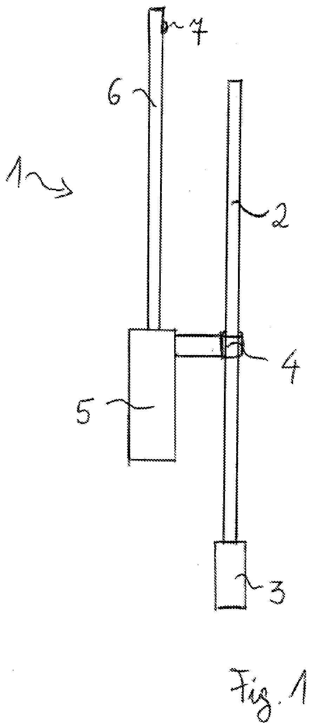

Figur 1 zeigt ein Ausführungsbeispiel für das Werkzeugantriebsmittel 1, das aus dem Antriebsmotor 5 und der Spindel 6 besteht.

Es ist weiterhin noch eine Gewindespindel 2 zu sehen, die von einem Servomotor 3 angetrieben wird.

An der Gewindespindel 2 ist drehfest ein Führungsschlitten 4 mit einem Innengewinde gelagert.

Bei einer Drehung der Gewindespindel 2 wird somit der Führungsschlitten 4 nach oben bzw. nach unten bewegt.

An dem Führungsschlitten 4 ist ein Antriebsmotor 5 für die Spindel 6 angebracht. Durch den Antriebsmotor 5 kann die Spindel 6 in Rotation um deren Längsachse versetzt werden.

Die Spindel 6 weist an ihrem oberen Ende einen Aufsteckbereich auf, auf den ein Werkzeugaufsatz aufgesteckt werden kann. Es ist zu sehen, dass in diesem Aufsteckbereich eine Kugel 7 teilweise hervorsteht.

Diese Kugel 7 kann in die Spindel 6 hineingedrückt werden, wenn ein Fixierelement (hier nicht dargestellt) in der gelösten Stellung ist.

Dem Fixierelement ist ein Riegelelement zugeordnet, das zwischen zwei Positionen hin- und her geschaltet werden kann.

Dies erfolgt, indem ein Betätigungselement entgegen einer Federkraft in einer Stellung gehalten wird, in der das Riegelelement in der Position ist, in der das Fixierelement gelöst ist.

Wird das Betätigungselement nicht in dieser Position gehalten, geht das Betätigungselement infolge der Federkraft in die Stellung über, in der das Riegelelement in der Position ist, in der das Fixierelement fixiert ist.

Dadurch wird die Kugel 7 formschlüssig gehalten, so dass diese aus der Spindel 6 herausgedrückt wird. Greift diese Kugel 7 dabei in eine Ausnehmung eines Werkzeugaufsatzes ein, wird dadurch eine Hinterschneidung gebildet, durch die der Werkzeugaufsatz formschlüssig auf dem Werkzeugantriebsmittel gehalten wird.

Die Werkzeugaufsätze werden über diese Kugel 7 hinweg aufgesteckt, wenn das Fixierelement in der gelösten Stellung ist. Im Bereich der Kugel 7 weisen die Werkzeugaufsätze Ausnehmungen auf. Befindet sich das Fixierelement in der fixierten Stellung, greift die Kugel 7 in diese Ausnehmung des Werkzeugaufsatzes ein. Durch den Eingriff mit der Ausnehmung des Werkzeugaufsatzes besteht eine formschlüssig wirkende Haltekraft für den Werkzeugaufsatz auf der Spindel 6.

Wird nur der Servomotor 3 angetrieben und der Antriebsmotor 5 nicht, wird das Werkzeugantriebsmittel 1 (d.h. der Antriebsmotor 5 und die Spindel 6) nach oben bzw. nach unten bewegt, ohne dass die Spindel 6 sich dreht. Läuft der Antriebsmotor 5, rotiert die Spindel 6.

In dieser Ausgestaltung wird die Drehgeschwindigkeit des Servomotors 3 vorteilhaft mit der Drehgeschwindigkeit des Antriebsmotors 5 synchronisiert entsprechend der Steigung des Gewindes der Schraube, die als Verbindungsmittel von dem Werkzeugantriebsmittel 1 gedreht werden soll sowie der Steigung der Gewindespindel 2. Dadurch wird die Geschwindigkeit des Werkzeugantriebsmittels in vertikaler Richtung mit der entsprechenden Geschwindigkeit des Verbindungsmittels synchronisiert.

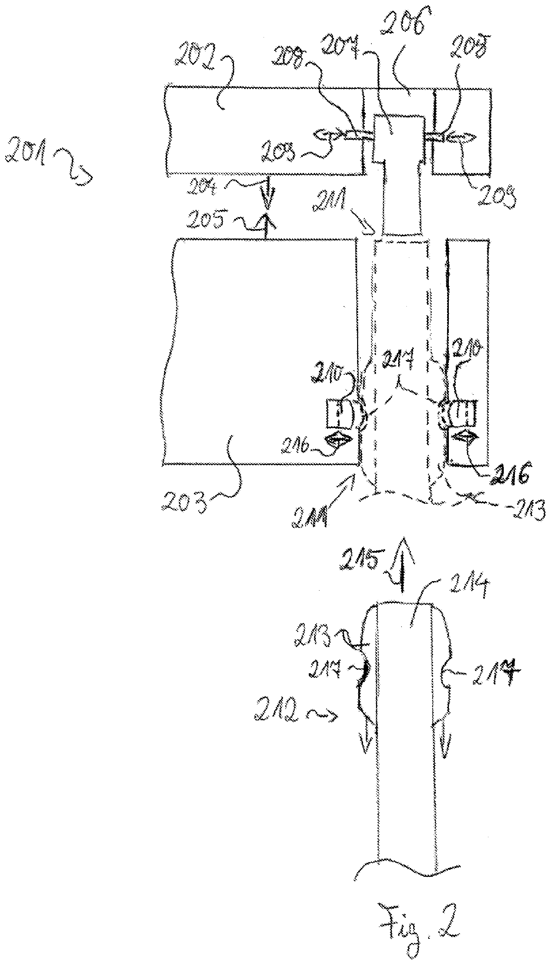

Figur 2 zeigt einen Schnitt durch ein Magazin 201. Dieses Magazin besteht aus zwei Teilen 202 und 203, die entsprechend den Pfeilen 204 und 205 aus der dargestellten Position, in der diese beiden Teile 202 und 203 beabstandet sind, in eine Position bewegbar sind, in der diese Teile aufeinander liegen.

In dem ersten Teil 202 des Magazins 201 ist ein Werkzeugaufsatzaufnahmeraum 206 vorhanden, in dem ein Werkzeugaufsatz 207, der hier als Nuss ausgebildet ist, mittels Haltemitteln 208 gehalten wird. Die Haltemittel 208 sind entsprechend den Pfeilen 209 bewegbar, so dass der Werkzeugaufsatz 207 mit den Haltemitteln 208 in der blockierten Stellung (wie in Figur 2 dargestellt) gehalten wird.

In dem zweiten Teil 203 des Magazins 201 ist in der Einführungsöffnung 211 für ein Werkzeugantriebsmittel 212 ein Klemmelement 210 ausgebildet.

Dieses Klemmelement 210 besteht aus Elementen, die entsprechend den Pfeilen 216 so bewegbar sind, dass diese die Einführungsöffnung 211 freigeben oder im Eingriff sind mit einer Ausnehmung 217 an dem Betätigungselement 213 des Werkzeugantriebsmittels 212.

Von dem Werkzeugantriebsmittel 212 ist lediglich der Schaft 214 gezeichnet, in den der Werkzeugaufsatz 207 eingesteckt wird.

Wird das Werkzeugantriebsmittel 212 in die Einführungsöffnung 211 des zweiten Teils 203 des Magazins 201 eingeschoben, wird dabei in der Position entsprechend der strichlinierten Darstellung in der Figur 2 das Betätigungselement 213 gehalten, indem die Elemente des Klemmelementes 210 in die Ausnehmung 217 des Betätigungselementes 213 eingeschoben sind. Das Betätigungselement 213 wird dadurch entgegen der Federkraft festgehalten, wenn das Werkzeugantriebsmittel 212 in die Einführungsöffnung 211 des zweiten Teils 203 des Magazins 201 eingeschoben wird.

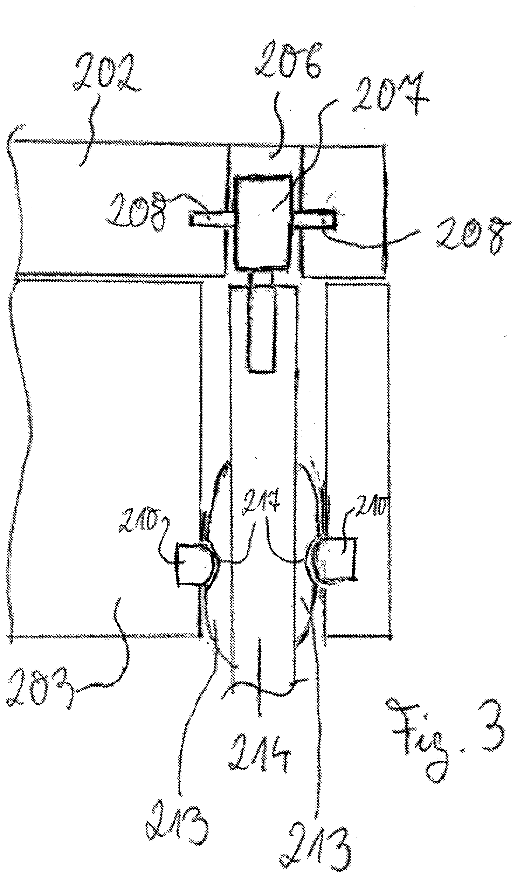

Figur 3 zeigt die Teile der Figur 2, wobei der erste Teil 202 des Magazins 201 sowie der zweite Teil 203 des Magazins 201 entsprechend der Richtung der Pfeile 204 und 205 der Figur 2 aufeinander zu bewegt wurden, so dass diese beiden Teile 202 und 203 des Magazins 201 aufeinander liegen.

Der Werkzeugaufsatz 207 wird durch die blockierten Haltemittel 208 festgehalten gegenüber dem ersten Teil 202 des Magazins 201. Das Werkzeugantriebsmittel 212 ist fest positioniert gegenüber dem zweiten Teil 203 des Magazins 201. Durch die Bewegung der beiden Teile 202 und 203 aufeinander zu wird damit das Werkzeugantriebsmittel 212 in axialer Richtung relativ zu dem Werkzeugaufsatz 207 bewegt.

Die Haltemittel 208 des Werkzeugaufsatzes 207 halten weiterhin den Werkzeugaufsatz 207.

Das Betätigungselement 213 des Werkzeugantriebsmittels 212 wird durch das Klemmelement 210, das in die Ausnehmung 217 des Betätigungselementes 213 eingeschoben ist, entgegen der Federkraft gehalten.

Dadurch befindet sich das Riegelelement in der Position, in der das Fixierelement gelöst ist. Dadurch kann der Werkzeugaufsatz 207 in den Schaft 214 des Werkzeugantriebsmittels 212 eingeschoben werden.

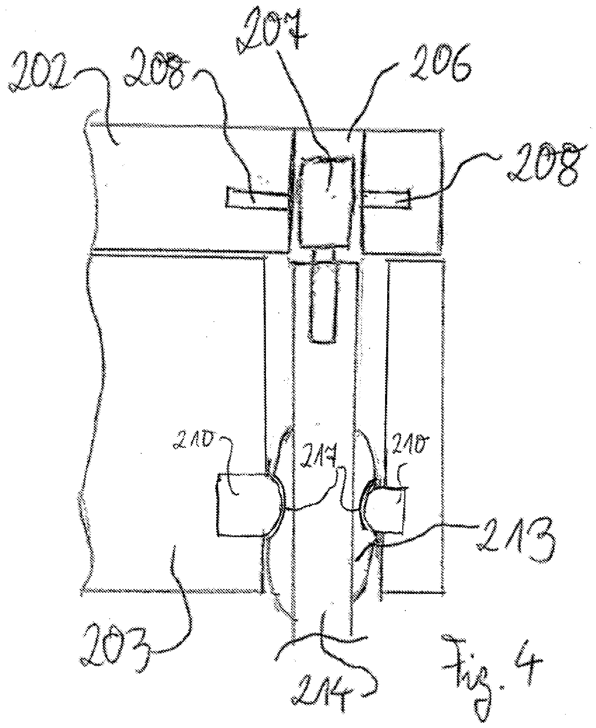

Figur 4 zeigt, wie im nächsten Schritt vor dem Herausziehen des Werkzeugantriebsmittels 212 aus dem Magazin 201 die Haltemittel 208 des Werkzeugaufsatzes 207 gelöst sind. Dadurch bleibt der Werkzeugaufsatz 207 beim nachfolgenden Herausziehen des Werkzeugantriebsmittels 212 aus dem Magazin 201 in dem Schaft 214. In dieser Stellung der Figur 4 greift das Klemmelement 210 noch in die Ausnehmung 217 des Betätigungselementes 213 ein und hält dieses entgegen der Federkraft.

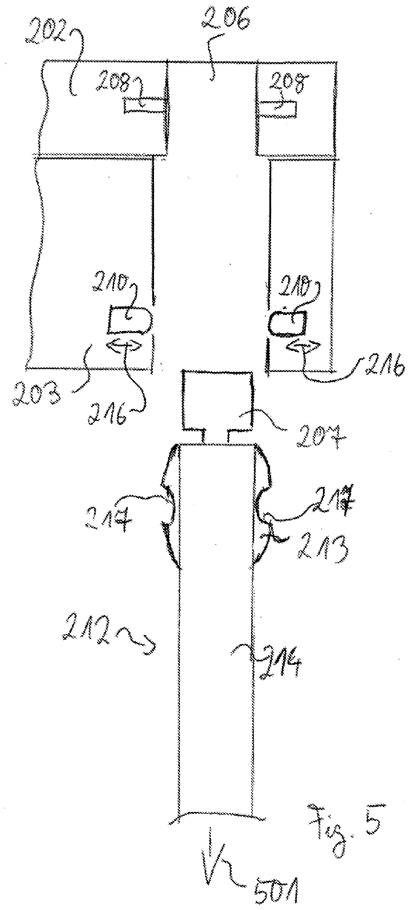

Figur 5 zeigt, wie das Werkzeugantriebsmittel 212 entsprechend der Richtung des Pfeils 501 aus dem Magazin 201 herausgezogen wird.

Dabei befindet sich der Werkzeugaufsatz 207 auf dem Werkzeugantriebsmittel 212.

Die Haltemittel 208 des Werkzeugaufsatzes 207 sind gelöst. Ebenso ist das Klemmelement 210 gelöst. Dies erfolgt, indem die Elemente des Klemmelementes 210 entsprechend den Pfeilen 216 aus der Ausnehmung 217 des Betätigungselementes 213 herausgezogen werden. Dadurch wird das Betätigungselement 213 freigegeben und geht infolge der wirkenden Federkraft in die Stellung, in der sich das Riegelelement in der Position befindet, in der das Fixierelement formschlüssig fixiert ist.

Dadurch wird der Werkzeugaufsatz 207 formschlüssig auf dem Werkzeugantriebsmittel 212 gehalten und steht für weitere Montagearbeiten zur Verfügung.

Soll der Werkzeugaufsatz nach der Durchführung der Montagearbeiten wieder von dem Werkzeugantriebsmittel abgenommen und in dem Werkzeugaufnahmeraum 206 des Magazins 201 gelagert werden, erfolgt dies in der Reihenfolge der Figuren 5, 4, 3 und 2.

Im ersten Schritt wird entsprechend der Darstellung der Figur 5 das Werkzeugantriebsmittel 212 bei geöffneten Haltemitteln 208 im Werkzeugaufnahmeraum 206 in das Magazin eingeführt. Dies erfolgt entgegen der Richtung des Pfeils 501.

Dabei werden die Elemente des Klemmelementes 210 in die Ausnehmung 217 des Betätigungselements 213 eingeschoben. Bei dem weiteren Einschieben des Werkzeugantriebsmittels 212 in das Magazin 201 wird dadurch das Betätigungselement 213 in die Stellung bewegt und dort gehalten, in der sich das Riegelelement in der Position befindet, in der das Fixierelement gelöst ist.

Der Werkzeugaufsatz 207 befindet sich noch im Schaft 214. Die Haltemittel 208 des Werkzeugaufsatzaufnahmeraumes 206 sind noch geöffnet. Dies entspricht der Darstellung der Figur 4

Anschließend werden entsprechend der Darstellung der Figur 3 die Haltemittel 208 in die Stellung gebracht, in der der Werkzeugaufsatz 207 blockiert wird.

Im nächsten Schritt werden entsprechend der Darstellung der Figur 2 (strichlinierte Darstellung des Werkzeugantriebsmittels 212) die beiden Teile 202 und 203 des Magazins 201 entgegen der Richtung der Pfeile 204 und 205 auseinander bewegt. Insbesondere wird dadurch auch der Werkzeugaufsatz 206, der durch die blockierten Haltemittel 208 gegenüber dem Teil 202 des Magazin 201 festgehalten wird, von dem Werkzeugantriebsmittel 212 abgehoben. Das Fixierelement ist dabei weiterhin gelöst.

Dadurch wird bei der Auseinanderbewegung der beiden Teile 202 und 203 des Magazins 201 der Werkzeugaufsatz 207 aus dem Schaft 214 des Werkzeugantriebsmittels 212 herausgezogen.

Anschließend wird das Werkzeugantriebsmittel 212 bei gelöstem Klemmelement 210 entgegen der Richtung des Pfeils 215 aus dem Magazin 201 herausgezogen und steht für eine neue Bestückung mit einem anderen Werkzeugaufsatz zur Verfügung.

Das Ausführungsbeispiel in den Figuren zeigt lediglich das Ankoppeln und das Abkoppeln eines Werkzeugaufsatzes 207 von dem Werkzeugantriebsmittel 212. Sofern das Magazin so aufgebaut ist, dass der bzw. die Werkzeugaufsatzaufnahmeräume 206 in einer ersten Ebene angeordnet sind und die Verbindungsmittelaufnahmeräume direkt darüber, ist ersichtlich, dass die Einführungsöffnung 211 und auch der Werkzeugaufsatzaufnahmeraum in deren lichter Weite so dimensioniert sein müssen, dass zumindest der Schaft 214 mit dem Betätigungselement 213 des Werkzeugantriebsmittels 212 durch die Einführungsöffnung 211 sowie ggf. auch den Werkzeugaufsatzaufnahmeraum 206 hindurchgeführt werden können, um das Verbindungsmittel aus dem darüber angeordneten Verbindungsmittelaufnahmeraum an seine Montageposition zu bewegen.

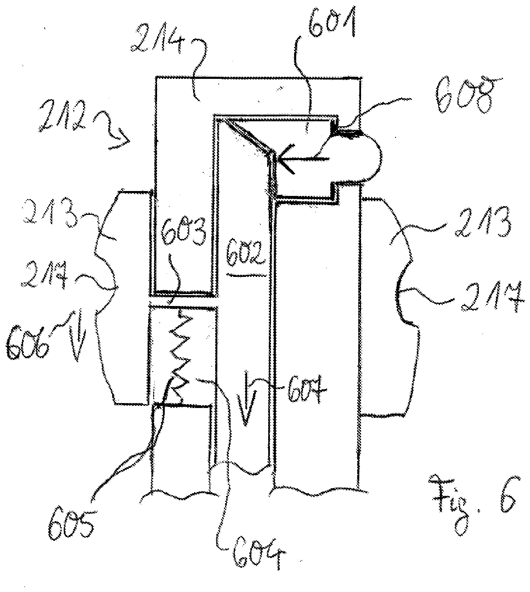

Figur 6 zeigt eine Erläuterung des Grundprinzips der Ankopplung eines Werkzeugaufsatzes (hier nicht dargestellt) an einem Werkzeugantriebsmittel 212 mit einem Fixierelement 601, einem Riegelelement 602 und einem Betätigungselement 213.

Es ist ein Schnitt durch das Werkzeugantriebsmittel 212 dargestellt.

Dabei ist das Betätigungselement 213 zu sehen, das über ein Verbindungselement 603 mit einem Riegelelement 602 verbunden ist. Dieses Verbindungselement 603 ist in einem axialen Längsschlitz 604 gelagert, der in dem Schaft 214 des Werkzeugantriebsmittels 212 verläuft. Dadurch ist die Einheit, die durch das Betätigungselement 213 über das Verbindungselement 603 mit dem Riegelelement 602 gebildet wird, in axialer Richtung gegenüber dem Schaft 214 des Werkzeugantriebsmittels 212 beweglich. Das Riegelelement 602 läuft in einer Bohrung im Inneren des Schaftes 214 des Werkzeugantriebsmittels 212.

Es ist zu sehen, dass die Einheit aus dem Betätigungselement 213, dem Verbindungselement 603 und dem Riegelelement 602 federelastisch gelagert ist (605) und durch die Federkraft in der Position gehalten wird, die in Figur 6 dargestellt ist.

Das Betätigungselement 213 ist in axialer Richtung zu dem Schaft 214 des Werkzeugantriebsmittels entgegen der Federkraft (605) in Richtung des Pfeiles 606 verschiebbar. Da das Riegelelement 602 über das Verbindungselement 603 mit dem Betätigungselement 213 gekoppelt ist, wird das Riegelelement 602 bei einer Bewegung des Betätigungselementes 213 in Richtung des Pfeiles 606 in Richtung des Pfeiles 607 mitbewegt.

Damit wird der Raum freigegeben, der in der Bohrung im Schaft 214 in Richtung des Pfeiles 608 hinter dem Fixierelement 601 liegt. Bei einer Krafteinwirkung in Richtung des Pfeils 608 rückt in diesem Fall das Fixierelement 601 flächenbündig zur Außenfläche des Schaftes 214 in den Schaft 214 ein.

In der Situation, die in der Figur 6 dargestellt ist, füllt das Riegelelement 602 den Raum aus, so dass das Fixierelement 601 formschlüssig daran gehindert wird, in den Schaft 214 einzurücken, wenn eine Kraft von außen auf das Fixierelement 601 wirkt.

Die Anlageflächen des Fixierelementes 601 sowie des Riegelelementes 602 zueinander sind so ausgestaltet, dass diese Fläche im unteren Teil des Fixierelementes 601 senkrecht, d.h. in axialer Richtung des Schaftes 214 verläuft. Im oberen Teil verlaufen diese Anlageflächen mit einer Schräge. Wenn das Riegelelement 602 entgegen der Federkraft 605 nach unten bewegt wurde und das Fixierelement 601 in den Schaft 214 eingerückt ist, wird durch den schrägen Verlauf der Anlageflächen im oberen Bereich erreicht, dass das Fixierelement 601 wieder nach außen gedrückt wird und damit dem Riegelelement ausweicht, wenn diese wieder mit der Federkraft 605 in die Position übergeht, die in Figur 6 dargestellt ist. Durch den vertikalen Anteil der Anlageflächen wird erreicht, dass das Fixierelement 601 formschlüssig gehalten und fixiert ist, wenn sich das Riegelelement in der in Figur 6 gezeigten Position befindet. Eine Krafteinwirkung in Richtung des Pfeils 608 auf das Fixierelement 601 führt wegen dieses vertikalen Teils der Anlagefläche nicht dazu, dass das Riegelelement 602 nach unten gedrückt wird.

In dem Betätigungselement 213 ist wieder die Ausnehmung 217 zu sehen, in die das Klemmelement 210 eingreift.

Es erweist sich als vorteilhaft, wenn das Riegelelement 602 und auch das Fixierelement 601 die jeweilige Bohrung in dem Schaft 214 möglichst vollständig ausfüllen. Dies bedeutet, dass das Riegelelement 602 und das Fixierelement 601 möglichst bündig mit ihren Flächen an den jeweiligen Wänden der Bohrungen anliegen. Damit wird zum einen die Beweglichkeit des Riegelelementes 601 sowie des Fixierelementes 601 gewährleistet. Außerdem wird damit erreicht, dass der Schaft insgesamt weitestgehend formstabil bleibt und eine gute mechanische Festigkeit aufweist insbesondere gegenüber Torsions- und Biegebeanspruchungen.

## Patentansprüche

1. Vorrichtung zum automatisierten An- und Abkoppeln eines Werkzeugaufsatzes (207) der Vorrichtung mit bzw. von einem Werkzeugantriebsmittel (212) der Vorrichtung,
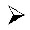 wobei der Werkzeugaufsatz (207) und das Werkzeugantriebsmittel (212) zur Betätigung eines Verbindungsmittels zur Verbindung wenigstens zweier Werkstücke ausgestaltet sind im Sinne einer Bewegung des Verbindungsmittels in dessen axialer Richtung,
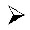 wobei der Werkzeugaufsatz (207) mit dem Werkzeugantriebsmittel (212) ankoppelbar und auch abkoppelbar ist,
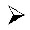 indem das Werkzeugantriebsmittel (212) und der Werkzeugaufsatz (207) in axialer Richtung relativ zueinander bewegt werden,
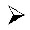 wobei das Werkzeugantriebsmittel (212) ein formschlüssig wirkendes Fixierelement (601) aufweist, sowie ein Riegelelement (602),
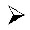 wobei das Fixierelement (601) abhängig von der Position des Riegelelementes (602) in einer fixierten Stellung formschlüssig verriegelt ist oder in einer gelösten Stellung ist,
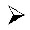 wobei der Werkzeugaufsatz (207) koppelbar und lösbar ist, wenn das Fixierelement (601) gelöst ist, und
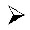 wobei ein auf das Werkzeugantriebsmittel (212) aufgesetzter Werkzeugaufsatz (207) von dem Fixierelement (601) formschlüssig gehalten wird, wenn das Fixierelement (601) in der fixierten Stellung verriegelt ist,
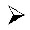 wobei das Riegelelement (602) federelastisch gelagert ist und wobei zu dem Riegelelement (602) ein Betätigungselement (213) vorhanden ist,
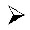 wobei das Riegelelement (602) durch die Federkraft (605) in der Position gehalten wird, in der das Fixierelement (601) in der fixierten Stellung formschlüssig verriegelt ist,
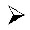 wobei das Riegelelement (602) in die Position übergeht, in der das Fixierelement (601) gelöst ist, wenn das Betätigungselement (213) entgegen der Federkraft (605) bewegt bzw. gehalten wird,
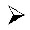 wobei ein Magazin (201) der Vorrichtung vorhanden ist mit wenigstens einem Werkzeugaufsatzaufnahmeraum (206),
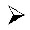 wobei, wenn das Werkzeugantriebsmittel (212) nicht mit einem Werkzeugaufsatz (207) gekoppelt ist, das Magazin (201) und das Werkzeugantriebsmittel (212) so zueinander beweglich sind, dass einer der wenigstens einen Werkzeugaufsatzaufnahmeräume (206) gegenüber dem Werkzeugantriebsmittel (212) so positionierbar ist, dass das Werkzeugantriebsmittel (212) mit einer Bewegung in axialer Richtung gegenüber dem Werkzeugaufsatz (207) mit dem Werkzeugaufsatz (207) koppelbar ist,
**dadurch gekennzeichnet**,
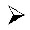 dass das Riegelelement (602) mit dem Betätigungselement (213) eine federelastisch (605) gelagerte Einheit bildet (603),
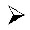 dass dem wenigstens einen Werkzeugaufsatzaufnahmeraum (206) lösbare und blockierbare Haltemittel (208) zugeordnet sind, durch die bei blockierten Haltemitteln (208) der Werkzeugaufsatz (207) form- und / oder kraftschlüssig gehalten wird zumindest gegenüber einer Bewegung in axialer Richtung relativ zu den Haltemitteln (208),
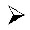 dass dem Werkzeugaufsatzaufnahmeraum (206) ein Klemmelement (210) für das Betätigungselement (213) zugeordnet ist derart, dass das Betätigungselement (213) bei der Bewegung des Werkzeugantriebsmittels (212) in axialer Richtung relativ zu dem durch die blockierten Haltemittel (208) gehaltenen Werkzeugaufsatz (207) entgegen der Federkraft (605) gegenüber dem Werkzeugantriebsmittel (212) bewegt wird, so dass das Riegelelement (602) in die Position übergeht, in der das Fixierelement (601) gelöst ist und 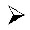 dass das Werkzeugantriebsmittel (212) in axialer Richtung beweglich ist gegenüber dem durch die blockierten Haltemittel (208) gehaltenen Werkzeugaufsatz (207) zum An- bzw. Abkoppeln des Werkzeugaufsatzes (207) mit bzw. von dem Werkzeugantriebsmittel (212).

2. Vorrichtung nach Anspruch 1,
**dadurch gekennzeichnet, dass** das Magazin (201) weiterhin wenigstens einen Verbindungsmittelaufnahmeraum aufweist zur Aufnahme eines Verbindungsmittels, wobei mittels des Verbindungsmittels wenigstens zwei Werkstücke miteinander verbindbar sind, indem das Verbindungsmittel zur Herstellung einer Verbindung der wenigstens zwei Werkstücke in dessen axialer Richtung aus dem Magazin (201) herausbewegt wird durch eine Betätigung mit dem Werkzeugaufsatz (207), der von dem Werkzeugantriebsmittel (212) angetrieben wird, wobei der Werkzeugaufsatz (207) das jeweilige Verbindungsmittel an einem Werkzeugangriffsbereich greift, wobei in dem Verbindungsmittelaufnahmeraum unterhalb des Werkzeugangriffsbereiches des Verbindungsmittels eine Öffnung zur Durchführung zumindest des Werkzeugaufsatzes (207) und gegebenenfalls weiterhin des Werkzeugantriebsmittels (212) vorhanden ist.

3. Vorrichtung nach Anspruch 1 oder 2,
**dadurch gekennzeichnet, dass** das Magazin (201) zweigeteilt ist derart (202. 203), dass das Klemmelement (210) gegenüber dem Haltemittel (208) in axialer Richtung bewegbar ist derart,
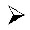 dass das Klemmelement (210) und das Halteelement (208) in einer ersten Stellung einen solchen Abstand aufweisen, dass ein in das Magazin (201) eingeführtes Werkzeugantriebsmittel (212), dessen Betätigungselement (213) durch das Klemmelement (210) in der Position gehalten wird, in der das Fixierelement (601) gelöst ist, und ein in dem Werkzeugaufsatzaufnahmeraum (206) durch die Haltemittel (208) gehaltener Werkzeugaufsatz (207) beabstandet sind, und
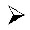 dass das Klemmelement (210) und die Haltemittel (208) aus dieser ersten Stellung in eine zweite Stellung aufeinander zu bewegbar sind, in der der Werkzeugaufsatz (207) auf dem Werkzeugantriebsmittel (212) aufgesteckt bzw. in das Werkzeugantriebsmittel (212) eingesteckt ist, wobei der Werkzeugaufsatz (207) auch beim Übergang von der ersten Stellung in diese zweiten Stellung von den Haltemitteln (208) gehalten wird, wobei das Betätigungselement (213) beim Übergang von dieser ersten Stellung in die zweite Stellung durch das Klemmelement (210) entgegen der Federkraft (605) gehalten wird, so dass das Riegelelement (602) in der Position ist, in der das Fixierelement (601) gelöst ist, und
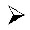 dass das Werkzeugantriebsmittel (212) aus dieser zweiten Stellung so gegenüber dem Klemmelement (210) in eine dritte Stellung bewegbar ist, dass der Werkzeugaufsatz (207) auf das Werkzeugantriebsmittel (212) aufgesteckt bzw. in das Werkzeugantriebsmittel eingesteckt ist und in dieser Position durch das Fixierelement (601) gehalten wird, wobei beim Übergang von der zweiten in die dritte Stellung die Haltemittel (208) des Werkzeugaufsatzaufnahmeraums (206) gelöst sind und wobei das Klemmelement (210) gelöst ist.

4. Vorrichtung nach einem der Ansprüche 2 oder 3, **dadurch gekennzeichnet, dass** in dem Magazin (201) der wenigstens eine Werkzeugaufsatzaufnahmeraum (206) und der wenigstens eine Verbindungsmittelaufnahmeraum in einer Ebene nebeneinander angeordnet sind.

5. Vorrichtung nach einem der Ansprüche 2 oder 3,
**dadurch gekennzeichnet, dass** das Magazin (201) mehrere Werkzeugaufsatzaufnahmeräume (206) aufweist, die in einer ersten Ebene angeordnet sind, sowie mehrere Verbindungsmittelaufnahmeräume, die in einer zweiten Ebene angeordnet sind, wobei die Werkzeugaufsatzaufnahmeräumen (206) in der ersten Ebene gegenüber den Verbindungsmittelaufnahmeräumen in der zweiten Ebene derart positioniert sind, dass ein Verbindungsmittel in einem Verbindungsmittelaufnahmeraum gegenüber einem Werkzeugaufsatz (207) in einem Werkzeugaufsatzaufnahmeraum (206) derart positioniert ist, dass der Werkzeugaufsatz (207) bei einer Bewegung des Werkzeugaufsatzes (207) in axialer Richtung des Verbindungsmittels das Verbindungsmittel an dem Werkzeugangriffsbereich des Verbindungsmittel greift.

6. Vorrichtung nach einem der Ansprüche 2 oder 3,
**dadurch gekennzeichnet, dass** das Magazin (201) einen oder mehrere Werkzeugaufsatzaufnahmeräume (206) aufweist, die in einer ersten Ebene angeordnet sind, sowie mehrere Verbindungsmittelaufnahmeräume, die in einer zweiten Ebene angeordnet sind, wobei das Magazin (201) wenigstens zweiteilig ausgestaltet ist derart, dass der erste Teil mit den Werkzeugaufsatzaufnahmeräumen (206) der ersten Ebene gegenüber dem zweiten Teil mit den Verbindungsmittelaufnahmeräumen der zweiten Ebene derart positionierbar ist, dass ein Verbindungsmittel in einem Verbindungsmittelaufnahmeraum gegenüber einem Werkzeugaufsatz (207) in einem Werkzeugaufsatzaufnahmeraum (206) derart positioniert ist, dass der Werkzeugaufsatz (207) bei einer Bewegung des Werkzeugaufsatzes (207) in axialer Richtung des Verbindungsmittels das Verbindungsmittel an dem Werkzeugangriffsbereich des Verbindungsmittels greift.

7. Vorrichtung nach einem der Ansprüche 1 bis 6,
**dadurch gekennzeichnet, dass** das Werkzeugantriebsmittel (212) ein drehbares Element (214) aufweist und dass das wenigstens eine Verbindungsmittel einen Gewindeteil aufweist, wobei die Bewegung des Werkzeugantriebsmittels (212) in axialer Richtung zum An- bzw. Abkoppeln des Werkzeugaufsatzes (207) von dem Werkzeugantriebsmittel (212) ohne eine Drehung des drehbaren Elementes (214) erfolgt.

8. Verfahren zum automatisierten Verbinden von wenigstens zwei Werkstücken mittels einer Vorrichtung nach einem der vorhergehenden Ansprüche,
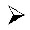 wobei in einem ersten Schritt die Haltemittel (208) in der blockierten Stellung den Werkzeugaufsatz (207) form- und/oder kraftschlüssig zumindest gegenüber einer Bewegung in axialer Richtung relativ zu den Haltemitteln (208) blockieren, dass in diesem ersten Schritt weiterhin das Betätigungselement (213) durch das Klemmelement (210) gegen die federelastische Kraft (605) bewegt bzw. gehalten wird, so dass sich das Riegelelement (602) in der Position befindet, in der das Fixierelement (601) gelöst ist, dass in diesem ersten Schritt das Werkzeugantriebsmittel (212) in axialer Richtung relativ zu dem durch die blockierten Haltemittel (208) gehaltenen Werkzeugaufsatz (207) bewegt wird zum Koppeln des Werkzeugaufsatzes (207) mit dem Werkzeugantriebsmittel (212),
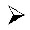 wobei in einem zweiten Schritt nach dem Koppeln des Werkzeugaufsatzes (207) mit dem Werkzeugantriebsmittel (212) die Haltemittel (208) gelöst werden sowie das Klemmelement (210) das Betätigungselement (213) freigibt, so dass das Riegelelement (602) in die Position übergeht, in der das Fixierelement (601) verriegelt ist,
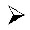 wobei in einem dritten Schritt wenigstens ein Verbindungsmittel mittels des Werkzeugaufsatzes (207) mit dem angekoppelten Werkzeugantriebsmittel (212) betätigt wird,
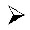 wobei in einem nachfolgenden vierten Schritt der Werkzeugaufsatz (207) wiederum in einem Werkzeugaufsatzaufnahmeraum (206) des Magazins positioniert wird,
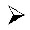 wobei in einem fünften Schritt die Haltemittel (208) dieses Werkzeugaufsatzaufnahmeraumes (206) in die blockierte Stellung gebracht werden,
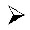 wobei in dem vierten und/oder in dem fünften Schritt das Betätigungselement (213) durch das Klemmelement (210) gehalten wird, so dass das Betätigungselement (213) entgegen der Federkraft (605) bewegt bzw. gehalten wird, so dass das Riegelelement (602) in die Position übergeht, in der das Fixierelement (601) gelöst ist,
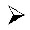 wobei in einem sechsten Schritt das Werkzeugantriebsmittel (212) in axialer Richtung relativ zu dem durch die blockierten Haltemittel (208) gehaltenen Werkzeugaufsatz (207) bewegt wird zum Abkoppeln des Werkzeugaufsatzes (207) von dem Werkzeugantriebsmittel (212),
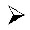 wobei in einem siebten Schritt das Klemmelement (210) geöffnet wird, so dass das Betätigungselement (213) infolge der Federkraft (605) in die Stellung übergeht, in der das Riegelelement (602) die Position aufweist, in der das Fixierelement (601) verriegelt ist.

9. Verfahren nach Anspruch 8,
**dadurch gekennzeichnet, dass** mehrere Werkzeugaufsatzaufnahmeräume (206) in dem Magazin (201) vorhanden sind, wobei vor dem ersten Schritt das Werkzeugantriebsmittel (212) und einer der Werkzeugaufsatzaufnahmeräume (206) so zueinander ausgerichtet werden, dass bei der nachfolgenden Relativbewegung des Werkzeugantriebsmittels (212) relativ zu dem durch die blockierten Haltemittel (208) gehaltenen Werkzeugaufsatz (207) dieses Werkzeugaufsatzaufnahmeraumes (206) der Werkzeugaufsatz (207) mit dem Werkzeugantriebsmittel (212) gekoppelt wird.

10. Verfahren nach einem der Ansprüche 8 oder 9,
**dadurch gekennzeichnet, dass** das Werkzeugantriebsmittel (212) ein drehbares Element (214) aufweist und dass das wenigstens eine Verbindungsmittel einen Gewindeteil aufweist, wobei die Bewegung des Werkzeugantriebsmittels (212) in axialer Richtung relativ zu dem von den blockierten Haltemitteln (208) gehaltenen Werkzeugaufsatz (207) beim An- bzw. Abkoppeln des Werkzeugaufsatzes (207) an bzw. von dem Werkzeugantriebsmittel (212) ohne eine Drehung des drehbaren Elementes (214) erfolgt.

## Claims

1. Device for the automated coupling and uncoupling of a tool attachment (207) of the device to or from a tool-driving means (212) of the device,
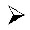 wherein the tool attachment (207) and the tool-driving means (212) is designed for actuating a connection means for connecting at least two workpieces in the direction of a movement of the connection means in the axial direction thereof,
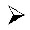 wherein it is possible to couple and also uncouple the tool attachment (207) to and from the tool-driving means (212)
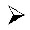 by the tool-driving means (212) and the tool attachment (207) being moved relative to one another in the axial direction,
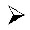 wherein the tool-driving means (212) comprises a positively acting fixing element (601), as well as a bolt element (602),
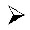 wherein the fixing element (601) is positively locked in a fixed position or is in a released position depending on the position of the bolt element (602),
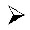 wherein it is possible for the tool attachment (207) to be coupled and released when the fixing element (601) is released, and
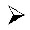 wherein a tool attachment (207) placed onto the tool-driving means (212) is positively retained by the fixing element (601) when the fixing element (601) is locked in the fixed position,
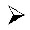 wherein the bolt element (602) is resiliently mounted and an actuating element (213) is provided for the bolt element (602),
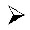 wherein the bolt element (602) is retained by the spring force (605) in the position in which the fixing element (601) is positively locked in the fixing position,
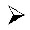 wherein the bolt element (602) transitions into the position in which the fixing element (601) is released when the actuating element (213) is moved or retained counter to the spring force (605),
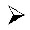 wherein a magazine (201) of the device is provided, which comprises at least one tool-attachment receiving space (206),
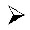 wherein, when the tool-driving means (212) is not coupled to a tool attachment (207), the magazine (201) and the tool-driving means (212) are movable relative to one another such that one of the at least one tool-attachment receiving spaces (206) can be positioned relative to the tool-driving means (212) such that the tool-driving means (212) can be coupled to the tool attachment (207) with a movement in the axial direction relative to the tool attachment (207),
**characterized in that**
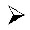 the bolt element (602) forms (603) a resiliently (605) mounted unit together with the actuating element (213),
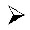 **in that** releasable and blockable retaining means (208) are associated with the at least one tool-attachment receiving space (206), by means of which retaining means, when said retaining means (208) are blocked, the tool attachment (207) is positively and/or non-positively retained at least in relation to a movement in the axial direction relative to the retaining means (208),
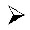 **in that** a clamping element (210) for the actuating element (213) is associated with the tool-attachment receiving space (206) such that, when the tool-driving means (212) is moved in the axial direction relative to the tool attachment (207) retained by the blocked retaining means (208), the actuating element (213) is moved counter to the spring force (605) relative to the tool-driving means (212) such that the bolt element (602) transitions into the position in which the fixing element (601) is released, and
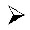 **in that** the tool-driving means (212) can be moved in the axial direction relative to the tool attachment (207) retained by the blocked retaining means (208) in order to couple or uncouple the tool attachment (207) to or from the tool-driving means (212).

2. Device according to claim 1,
**characterized in that** the magazine (201) further comprises at least one connection-means receiving space for receiving a connection means, wherein it is possible for at least two workpieces to be interconnected by means of the connection means by the connection means being moved out of the magazine (201) in the axial direction thereof to establish a connection between the at least two workpieces by actuation with the tool attachment (207), which is driven by the tool-driving means (212), wherein the tool attachment (207) grips the relevant connection means at a tool-engagement region, wherein an opening is provided in the connection-means receiving space below the tool-engagement region of the connection means for guiding through at least one tool attachment (207) and also optionally the tool-driving means (212).

3. Device according to claim 1 or 2,
**characterized in that** the magazine (201) is divided into two parts such (202, 203) that the clamping element (210) can be moved relative to the retaining means (208) in the axial direction such that
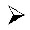 the clamping element (210) and the retaining element (208) are at such a distance in a first position that a tool-driving means (212) inserted into the magazine (201), the actuating element (213) of which tool-driving means is retained by the clamping element (210) in the position in which the fixing element (601) is released, and a tool attachment (207) retained in the tool-attachment receiving space (206) by the retaining means (208) are at a distance from one another, and
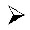 such that the clamping element (210) and the retaining means (208) can be moved towards one another out of said first position into a second position in which the tool attachment (207) is placed onto the tool-driving means (212) or is inserted into the tool-driving means (212), wherein the tool attachment (207) is also retained by the retaining means (208) when transitioning from the first position into said second position, wherein the actuating element (213) is retained by the clamping element (210) counter to the spring force (605) when transitioning from said first position into the second position, such that the bolt element (602) is in the position in which the fixing element (601) is released, and
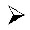 such that the tool-driving means (212) can be moved out of said second position relative to the clamping element (210) into a third position such that the tool attachment (207) is placed onto the tool-driving means (212) or is inserted into the tool-driving means and is retained in this position by the fixing element (601), wherein the retaining means (208) of the tool-attachment receiving space (206) is released when transitioning from the second into the third position, and wherein the clamping element (210) is released.

4. Device according to any of claims 2 or 3,
**characterized in that** the at least one tool-attachment receiving space (206) and the at least one connection-means receiving space are arranged beside one another in one plane in the magazine (201).

5. Device according to any of claims 2 or 3,
**characterized in that** the magazine (201) comprises a plurality of tool-attachment receiving spaces (206) which are arranged in a first plane as well as a plurality of connection-means receiving spaces which are arranged in a second plane, wherein the tool-attachment receiving spaces (206) are positioned in the first plane relative to the connection-means receiving spaces in the second plane such that a connection means is positioned in a connection-means receiving space relative to a tool attachment (207) in a tool-attachment receiving space (206) such that the tool attachment (207) grips the connection means at the tool-engagement region of the connection means when the tool attachment (207) moves in the axial direction of the connection means.

6. Device according to any of claims 2 or 3,
**characterized in that** the magazine (201) comprises one or more tool-attachment receiving spaces (206) which are arranged in a first plane as well as a plurality of connection-means receiving spaces which are arranged in a second plane, wherein the magazine (201) is formed in at least two parts such that the first part comprising the tool-attachment receiving spaces (206) in the first plane can be positioned relative to the second part comprising the connection-means receiving spaces in the second plane such that a connection means is positioned in a connection-means receiving space relative to a tool attachment (207) in a tool-attachment receiving space (206) such that the tool attachment (207) grips the connection means at the tool-engagement region of the connection means when the tool attachment (207) moves in the axial direction of the connection means.

7. Device according to any of claims 1 to 6,
**characterized in that** the tool-driving means (212) comprise a rotatable element (214) and **in that** the at least one connection means comprises a threaded part, wherein the tool-driving means (212) is moved in the axial direction for coupling or uncoupling the tool attachment (207) to or from the tool-driving means (212) without rotating the rotatable element (214).

8. Method for the automated connection of at least two workpieces by means of a device according to any of the preceding claims,
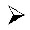 wherein, in a first step, in the blocked position, the retaining means (208) positively and/or non-positively block the tool attachment (207) at least against a movement in the axial direction relative to the retaining means (208), in this first step, the actuating element (213) being moved or retained against the resilient force (605) by the clamping element (210) such that the bolt element (602) is in the position in which the fixing element (601) is released, in this first step, the tool-driving means (212) being moved in the axial direction relative to the tool attachment (207) retained by the blocked retaining means (208) in order to couple the tool attachment (207) to the tool-driving means (212),
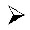 wherein, in a second step, after coupling the tool attachment (207) to the tool-driving means (212), the retaining means (208) are released and the clamping element (210) unblocks the actuating element (213) such that the bolt element (602) transitions into the position in which the fixing element (601) is locked,
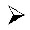 wherein, in a third step, at least one connection means is actuated by means of the tool attachment (207) together with the coupled tool-driving means (212),
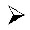 wherein, in a subsequent fourth step, the tool attachment (207) is in turn positioned in a tool-attachment receiving space (206) in the magazine,
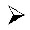 wherein, in a fifth step, the retaining means (208) of this tool-attachment receiving space (206) are brought into the blocked position,
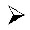 wherein, in a fourth and/or fifth step, the actuating element (213) is retained by the clamping element (210) such that the actuating element (213) is moved or retained counter to the spring force (605) such that the bolt element (602) transitions into the position in which the fixing element (601) is released,
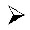 wherein, in a sixth step, the tool-driving means (212) is moved in the axial direction relative to the tool attachment (207) retained by the blocked retaining means (208) in order to uncouple the tool attachment (207) from the tool-driving means (212),
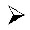 wherein, in a seventh step, the clamping element (210) is opened such that, as a result of the spring force (605), the actuating element (213) transitions into the position in which the bolt element (602) assumes the position in which the fixing element (601) is locked.

9. Method according to claim 8,
**characterized in that** a plurality of tool-attachment receiving spaces (206) are provided in the magazine (201), wherein, before the first step, the tool-driving means (212) and one of the tool-attachment receiving spaces (206) are oriented relative to one another such that, when the tool-driving means (212) subsequently moves relative to the tool attachment (207) of this tool-attachment receiving space (206) retained by the blocked retaining means (208), the tool attachment (207) is coupled to the tool-driving means (212).

10. Method according to any of claims 8 or 9,
**characterized in that** the tool-driving means (212) comprise a rotatable element (214) and **in that** the at least one connection means comprises a threaded part, wherein the tool-driving means (212) is moved in the axial direction relative to the tool attachment (207) retained by the blocked retaining means (208) when coupling or uncoupling the tool attachment (207) to or from the tool-driving means (212) without rotating the rotatable element (214).

## Revendications

1. Dispositif pour l'accouplement automatisé d'une tête d'outil (207) de ce dispositif avec un moyen d'entraînement d'outil (212) de ce dispositif et pour le désaccouplement automatisé d'une tête d'outil (207) de ce dispositif avec un moyen d'entraînement d'outil (212) de ce dispositif,
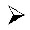 dans lequel la tête d'outil (207) et le moyen d'entraînement d'outil (212) sont conçus pour actionner au moins un moyen de connexion pour relier au moins deux pièces à usiner dans le sens d'un mouvement du moyen de connexion dans sa direction axiale,
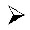 dans lequel la tête d'outil (207) peut être couplée au moyen d'entraînement d'outil (212) et également être découplée de ce moyen d'entraînement d'outil (212)
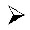 en déplaçant le moyen d'entraînement d'outil (212) et la tête d'outil (207) l'un par rapport à l'autre en direction axiale,
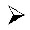 dans lequel le moyen d'entraînement d'outil (212) comporte un élément de fixation par complémentarité de forme (601) et un élément de verrouillage (602),
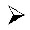 dans lequel l'élément de fixation (601) est, en fonction de la position de l'élément de verrouillage (602), soit verrouillé de par complémentarité de forme dans une position fixe, soit est dans une position libérée, et
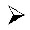 dans lequel la tête d'outil (207) peut être couplée et libérée lorsque l'élément de fixation (601) est libéré, et
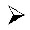 dans lequel une tête d'outil (207) placée sur le moyen d'entraînement d'outil (212) est maintenue par complémentarité de forme par l'élément de fixation (601) lorsque ce dernier est verrouillé en position fixe,
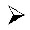 dans lequel l'élément de verrouillage (602) est monté de sorte élastique et dans lequel un élément d'actionnement (213) est prévu pour l'élément de verrouillage (602),
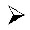 dans lequel l'élément de verrouillage (602) est maintenu par la force du ressort (605) dans la position dans laquelle l'élément de fixation (601) est verrouillé par complémentarité de forme dans la position fixe,
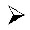 dans lequel l'élément de verrouillage (602) passe dans la position dans laquelle l'élément de fixation (601) est libéré lorsque l'élément d'actionnement (213) est déplacé ou maintenu contre la force du ressort (605),
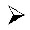 dans lequel un magasin (201) du dispositif est présent, ce magasin ayant au moins un espace de réception d'un outil (206),
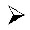 dans lequel, lorsque le moyen d'entraînement d'outil (212) n'est pas couplé à une tête d'outil (207), le magasin (201) et le moyen d'entraînement d'outil (212) sont mobiles l'un par rapport à l'autre de telle sorte que l'un des au moins un espace de réception de la tête d'outil (206) peut être positionné par rapport au moyen d'entraînement d'outil (212) de telle sorte que le moyen d'entraînement d'outil (212) peut être couplé à la tête d'outil (207) avec un mouvement en direction axiale par rapport à la tête d'outil (207),
**caractérisé en ce que**
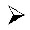 l'élément de verrouillage (602) forme (603) avec l'élément d'actionnement (213) une unité montée élastiquement (605),
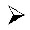 **en ce que** des moyens de retenue (208) libérables et verrouillables sont associés à l'au moins un espace de réception (206) de la tête d'outil, au moyen desquels, la tête d'outil (207) est maintenue par engagement positif et/ou par force au moins par rapport à un mouvement en direction axiale par rapport aux moyens de retenue (208), lorsque les moyens de retenue (208) sont verrouillés,
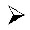 **en ce qu'**un élément de serrage (210) pour l'élément d'actionnement (213) est associé à l'espace de réception (206) de la tête d'outil de telle sorte que l'élément d'actionnement (213) est déplacé par rapport à la tête d'outil (207) maintenue par les moyens de retenue (208) bloqués contre la force de ressort (605) par rapport au moyen d'entraînement d'outil (212) pendant le mouvement du moyen d'entraînement d'outil (212) en direction axiale par rapport à la tête d'outil (207) maintenue par le moyen de retenue bloqué (208), de sorte que l'élément de blocage (602) passe dans la position dans laquelle l'élément de fixation (601) est libéré, et
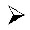 **en ce que** le moyen d'entraînement d'outil (212) est mobile en direction axiale par rapport à la tête d'outil (207) maintenue par les moyens de retenue bloqués (208) pour l'accouplement au moyen d'entraînement d'outil (212) et le désaccouplement de la tête d'outil (207) du moyen d'entraînement d'outil (212).

2. Dispositif selon la revendication 1,
**caractérisé en ce que** le magasin (201) comprend en outre au moins un espace de réception de moyens de connexion pour recevoir un moyen de connexion, dans lequel au moins deux pièces à usiner peuvent être reliées l'une à l'autre au moyen du moyen de connexion en déplaçant le moyen de connexion hors du magasin (201) dans sa direction axiale par actionnement avec la tête d'outil (207) entraînée par le moyen d'entraînement d'outil (212) afin de produire une connexion des au moins deux pièces à usiner, dans lequel la tête d'outil (207) saisit le moyen de connexion respectif au niveau d'une zone d'engagement d'outil, dans lequel une ouverture est prévue dans l'espace de réception du moyen de connexion pour le passage au moins de la tête d'outil (207) et éventuellement en outre du moyen d'entraînement d'outil (212), cette ouverture étant située en dessous de la zone d'engagement d'outil du moyen de connexion.

3. Dispositif selon la revendication 1 ou 2,
**caractérisé en ce que** le magasin (201) est divisé en deux (202, 203) de telle manière que l'élément de serrage (210) est mobile en direction axiale par rapport au moyen de retenue (208) de telle manière,
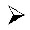 que l'élément de serrage (210) et l'élément de retenue (208) sont écartés dans une première position de telle manière qu'un moyen d'entraînement d'outil (212) inséré dans le magasin (201) et dont l'élément d'actionnement (213) est maintenu par l'élément de serrage (210) dans la position dans laquelle l'élément de fixation (601) est libéré, et une tête d'outil (207) maintenue dans l'espace de réception de fixation d'outil (206) par les moyens de retenue (208) sont écartés l'un de l'autre, et
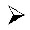 **en ce que** l'élément de serrage (210) et le moyen de retenue (208) peuvent être déplacés l'un vers l'autre de cette première position dans une deuxième position dans laquelle la tête d'outil (207) est enfichée ou insérée dans le moyen d'entraînement d'outil (212), la tête d'outil (207) étant également maintenue par les moyens de retenue (208) pendant le passage de la première position à cette deuxième position, l'élément d'actionnement (213) étant maintenu par l'élément de serrage (210) contre la force du ressort (605) pendant le passage de cette première position à la deuxième position, de sorte que l'élément de verrouillage (602) se trouve dans la position dans laquelle l'élément de fixation (601) est libéré, et
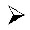 **en ce que** le moyen d'entraînement d'outil (212) peut être déplacé de cette deuxième position dans une troisième position par rapport à l'élément de serrage (210) de telle sorte que la tête d'outil (207) est enfichée ou insérée dans le moyen d'entraînement d'outil (212) dans le moyen d'entraînement d'outil et est maintenue dans cette position par l'élément de fixation (601), les moyens de retenue (208) de l'espace de réception (206) de la tête d'outil étant libéré lors du passage de la deuxième à la troisième position, et l'élément de serrage (210) étant libéré.

4. Dispositif selon l'une des revendications 2 ou 3,
**caractérisé en ce que** dans le magasin (201), le au moins un espace de réception d'outils (206) et le au moins un espace de réception de moyens de connexion sont disposés côte à côte dans un plan.

5. Dispositif selon l'une des revendications 2 ou 3,
**caractérisé en ce que** le magasin (201) comporte une pluralité d'espaces de réception de fixation d'outil (206) disposés dans un premier plan et une pluralité d'espaces de réception de fixation disposés dans un second plan, les espaces de réception de fixation d'outil (206) dans le premier plan étant positionnés en face des espaces de réception de fixation dans le second plan, **en ce qu'**un moyen de connexion dans un espace de réception de moyens de connexion est positionné en face d'une tête d'outil (207) dans un espace de réception de têtes d'outil (206) de telle manière que la tête d'outil (207) saisit le moyen de connexion au niveau de la zone d'engagement de l'outil du moyen de connexion lorsque la tête d'outil (207) est déplacée dans la direction axiale du moyen de connexion.

6. Dispositif selon l'une des revendications 2 ou 3,
**caractérisé en ce que** le magasin (201) comprend un ou plusieurs espaces de réception de têtes d'outil (206) disposés dans un premier plan et une pluralité d'espaces de réception de moyens de connexion disposés dans un second plan, dans lequel le magasin (201) est conçu en au moins deux parties de telle manière que la première partie avec les espaces de réception de têtes d'outil (206) du premier plan peut être positionnée par rapport à la seconde partie avec les espaces de réception de moyens de connexion du second plan, **en ce qu'**un moyen de connexion dans un espace de réception de moyens de connexion est positionné en face d'une tête d'outil (207) dans un espace de réception de têtes d'outil (206) de telle manière que la tête d'outil (207) saisit le moyen de connexion au niveau de la zone d'engagement d'outil du moyen de connexion lorsque la tête d'outil (207) se déplace dans la direction axiale du moyen de connexion.

7. Dispositif selon l'une des revendications 1 à 6,
**caractérisé en ce que** le moyen d'entraînement d'outil (212) présente un élément rotatif (214) et **en ce que** le au moins un moyen de connexion présente une partie filetée, le mouvement du moyen d'entraînement d'outil (212) en direction axiale pour l'accouplement ou le désaccouplement de la tête d'outil (207) du moyen d'entraînement d'outil (212) s'effectuant sans rotation de l'élément rotatif (214).

8. Procédé pour l'assemblage automatisé d'au moins deux pièces à usiner au moyen d'un dispositif selon l'une des revendications précédentes,
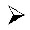 dans lequel, dans une première étape, les moyens de retenue (208) en position de blocage bloquent la fixation d'outil (207) par complémentarité de forme et/ou par force au moins par rapport à un mouvement en direction axiale par rapport aux moyens de retenue (208), en ce que, dans cette première étape, l'élément d'actionnement (213) est déplacé par l'élément de serrage (210) contre la force élastique du ressort (605) de sorte que l'élément de verrouillage (602) se trouve dans la position dans laquelle l'élément de fixation (601) est libéré, en ce que dans cette première étape, le moyen d'entraînement d'outil (212) est déplacé en direction axiale par rapport à la tête d'outil (207) maintenue par le moyen de retenue bloqué (208) pour coupler la tête d'outil (207) avec le moyen d'entraînement d'outil (212),
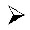 dans lequel, dans une deuxième étape, après l'accouplement de la tête d'outil (207) avec le moyen d'entraînement d'outil (212), les moyens de retenue (208) sont libérés et l'élément de serrage (210) libère l'élément d'actionnement (213) de sorte que l'élément de verrouillage (602) passe dans la position dans laquelle l'élément de fixation (601) est verrouillé,
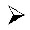 dans lequel, dans une troisième étape subséquente, au moins un moyen de connexion est actionné au moyen de la tête d'outil (207) ensemble avec le moyen d'entraînement d'outil couplé (212),
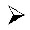 dans lequel, dans une quatrième étape ultérieure, la tête d'outil (207) est à nouveau positionnée dans un espace de réception d'outil (206) du magasin,
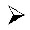 dans lequel, dans une cinquième étape, les moyens de retenue (208) de cet espace de réception (206) de têtes d'outil sont amenés en position de blocage,
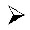 dans lequel, à la quatrième et/ou à la cinquième étape, l'élément d'actionnement (213) est maintenu par l'élément de serrage (210), de sorte que l'élément d'actionnement (213) est déplacé ou maintenu contre la force du ressort (605), de sorte que l'élément de verrouillage (602) passe dans la position dans laquelle l'élément de fixation (601) est libéré,
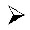 dans lequel, dans une sixième étape, le moyen d'entraînement d'outil (212) est déplacé dans la direction axiale par rapport à la tête d'outil (207) maintenue par le moyen de maintien bloqué (208) pour découpler la tête d'outil (207) du moyen d'entraînement d'outil (212),
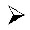 dans lequel, dans une septième étape, l'élément de serrage (210) est ouvert de sorte que, sous l'effet de la force du ressort (605), l'élément d'actionnement (213) se déplace dans la position dans laquelle l'élément de verrouillage (602) a la position dans laquelle l'élément de fixation (601) est verrouillé.

9. Procédé selon la revendication 8,
**caractérisé en ce qu'**une pluralité d'espaces (206) de réception de têtes d'outils sont prévus dans ledit magasin (201), dans lequel, avant ladite première étape, lesdits moyens (212) d'entraînement d'outils et l'un desdits espaces (206) de réception de têtes d'outils sont alignés les uns avec les autres de telle sorte que, lors du mouvement relatif ultérieur du moyen d'entraînement d'outil (212) par rapport à la tête d'outil (207) maintenue par le moyen de retenue bloqué (208) de cet espace de réception de têtes de l'outil (206), la tête d'outil (207) est couplée au moyen d'entraînement d'outil (212).

10. Procédé selon l'une des revendications 8 ou 9,
**caractérisé en ce que** le moyen d'entraînement d'outil (212) présente un élément rotatif (214) et **en ce que** le au moins un moyen de connexion présente une partie filetée, le mouvement du moyen d'entraînement d'outil (212) en direction axiale par rapport à la tête d'outil (207) maintenue par le moyen de retenue bloqué (208) s'effectuant sans rotation de l'élément rotatif (214) lorsque la tête d'outil (207) est accouplé moyen d'entraînement d'outil (212) ou désaccouplé de celui-ci.
